**Europäisches Patentamt**

**European Patent Office**

**Office européen des brevets**

(11) Numéro de publication : **0 421 837 B1**

# (12) FASCICULE DE BREVET EUROPEEN

(45) Date de publication du fascicule du brevet :
**19.08.92 Bulletin 92/34**

(51) Int. Cl.⁵ : **A01J 27/00,** A22C 17/10,
B23K 26/00, B23K 26/06,
B23K 26/18

(21) Numéro de dépôt : **90402620.0**

(22) Date de dépôt : **21.09.90**

(54) **Installation pour le marquage superficiel par laser d'un produit alimentaire fromager ou charcutier.**

(30) Priorité : **04.10.89 FR 8912982**

(43) Date de publication de la demande :
**10.04.91 Bulletin 91/15**

(45) Mention de la délivrance du brevet :
**19.08.92 Bulletin 92/34**

(84) Etats contractants désignés :
**AT BE CH DE DK ES FR GB GR IT LI LU NL SE**

(56) Documents cités :
**EP-A- 0 031 239**
**FR-A- 2 195 408**
**FR-A- 2 621 529**

(73) Titulaire : **BONGRAIN S.A.**
**Le Moulin-à-Vent**
**F-78280 Guyancourt (FR)**

(72) Inventeur : **Piliero,Rocco**
**44 rue Saint-Aventin**
**F-53200 Aze (FR)**

(74) Mandataire : **Derambure, Christian**
**Cabinet Bouju Derambure (Bugnion) S.A. 55,**
**rue Boissonade**
**F-75014 Paris (FR)**

Jouve, 18, rue Saint-Denis, 75001 PARIS

## Description

L'invention concerne une installation pour le marquage superficiel par laser d'un produit alimentaire fromager ou charcutier.

On connaît déjà (document FR-A-2621529) un procédé de marquage d'une marque superficielle sur un produit alimentaire à marquer notamment fromager ou charcutier, par traitement thermique, dans lequel on soumet directement le produit alimentaire à traiter, nu et à consistance solide, à au moins un faisceau laser dont les caractéristiques du rayonnement sont choisies et réglées pour assurer un échauffement localisé du produit alimentaire à traiter apte d'une part à brûler, sans substantiellement vaporiser, le produit alimentaire au moins sensiblement à l'endroit de l'impact du faisceau laser, d'autre part à limiter l'échauffement du produit alimentaire à traiter au voisinage immédiat de l'impact.

Un appareil de marquage par laser pour la mise en oeuvre du procédé comporte des moyens de support du produit alimentaire nu à marquer, un laser apte à émettre un faisceau laser en direction des moyens supports et des moyens aptes à réaliser un balayage transversal combiné à un coulissement longitudinal pas à pas relatif du faisceau laser par rapport aux moyens support du produit alimentaire à marquer. Selon une variante possible de réalisation, l'appareil comprend un masque destiné à être interposé sur le faisceau laser, comportant une fenêtre dont le bord correspond au contour de la marque à réaliser.

La présente invention vise à proposer une installation pour le marquage superficiel par laser d'un produit alimentaire fromager ou charcutier permettant la mise en oeuvre du procédé mentionné précédemment. Cette installation, conforme à l'invention, permet une mise en oeuvre industrielle du procédé ce qui implique des conditions de productivité, de facilité d'emploi, de sécurité, etc. ainsi que cela est généralement requis dans les processus industriels.

Dans le cas présent, il se pose en effet différents problèmes notamment le fait que la marque concerne généralement la face supérieure et la face latérale du produit alimentaire ; la nécessité de pouvoir traiter successivement un grand nombre de produits alimentaires ; la nécessité de pouvoir saisir convenablement le masque afin de le mettre en place et de l'enlever ; la sécurité ; la réalisation d'une marque à contour franc, etc...

On a déjà proposé des systèmes permettant d'orienter des rayons lasers afin de diriger le rayon laser de façon convenable en fonction de l'usage recherché. On peut se référer par exemple au document EP-A-0178011 qui concerne un robot pourvu d'un rayon laser. Cependant, un dispositif tel que ce robot n'est sans doute pas approprié au cas du marquage laser d'un produit alimentaire fromager ou charcutier.

L'installation selon l'invention, du type mentionné précédemment, comporte donc au moins un poste de marquage laser comprenant une table linéaire horizontale supportant un chariot monté à coulissement horizontal le long d'un axe xx ; des moyens de réception du faisceau laser provenant du laser et de renvoi de ce faisceau selon l'axe xx en direction frontale, constituant un ensemble de projection du faisceau laser ; un premier dispositif de renvoi du faisceau laser, verticalement et vers le bas, porté frontalement par le chariot sur l'axe xx, de manière à recevoir le faisceau laser en sortie de l'ensemble de projection ; un deuxième dipositif de renvoi du faisceau laser, selon d'une part un axe x'x' parallèle à et situé verticalement en dessous à l'aplomb de l'axe xx et d'autre part la direction frontale, située de façon proximale et frontale par rapport à la table ; un plateau support du produit alimentaire à marquer, horizontal, monté à pivotement autour d'un axe vertical situé sensiblement dans le plan médian xxx'x', situé de façon distale par rapport à la table, sensiblement coplanaire avec le deuxième dispositif de renvoi ; des moyens d'entrainement du plateau support à pivotement autour de son axe ; des moyens d'entrainement du chariot à coulissement le long de son axe de coulissement xx entre une position distale et une position proximale où le premier dispositif de renvoi est situé verticalement au dessus à l'aplomb verticalement du plateau support et du deuxième dispositif de renvoi ; et, enfin, des moyens de commande des moyens d'entrainement du plateau et des moyens d'entrainement du chariot à coulissement le long de son axe xx.

Selon une autre caractéristique, l'installation comporte également au moins un poste pour l'enrobage du produit alimentaire à marquer avec de la farine ou équivalent, placé en amont du poste de marquage, comprenant une enceinte ayant une ouverture frontale de chargement et de déchargement ; un plateau support monté à pivotement autour d'un axe vertical, situé en partie basse de l'enceinte ; des moyens d'entrainement du plateau support à pivotement autour de son axe ; au moins un pistolet de projection de vernis associé à des moyens d'amenée de vernis placé à un niveau plus élevé que le plateau support et dirigé vers lui ; au moins un pistolet de projection de farine ou équivalent associé à des moyens d'amenée de farine ou équivalent, placé à un niveau plus élevé que le plateau support et dirigé vers lui; et, enfin, des moyens de commande de l'entrainement du plateau support et du pistolet de projection de vernis et de farine ou équivalent.

Des autres caractéristiques de l'invention résulteront de la description qui suivra en référence aux dessins annexés dans lesquels :

La figure 1 est une vue schématique de dessus illustrant une installation pour le marquage laser selon l'invention.

La figure 2 est une vue schématique de dessus d'un ensemble pour le marquage laser.

La figure 3 est une vue schématique en élévation frontale de l'ensemble de marquages lasers de la figure 2.

La figure 4 est une vue schématique en coupe selon la ligne IV-IV de la figure 2.

Les figures 5a à 5j sont dix vues schématiques illustrant les étapes successives de marquage laser.

La figure 6 est une vue schématique en perspective d'un produit alimentaire marqué conformément à l'invention.

La figure 7 est une vue schématique en perspective d'un masque de l'intallation selon l'invention.

Les figures 8a, 8b, 8c et 8d sont quatre vues schématiques, semblables à celle de la figure 4 illustrant les étapes caractéristiques de la mise en oeuvre de l'intallation et des positions relatives des organes qui la composent.

La figure 9 est une vue schématique en coupe selon la ligne IX-IX de la figure 4 illustrant un mode de réalisation du dispositif de renvoi du faisceau laser.

Les figures 10 et 11 sont deux vues schématiques respectivement frontalement et de côté d'un poste d'enrobage d'une installation selon l'invention.

Les figures 12a à 12j sont dix vues schématiques illustrant les étapes successives de l'enrobage.

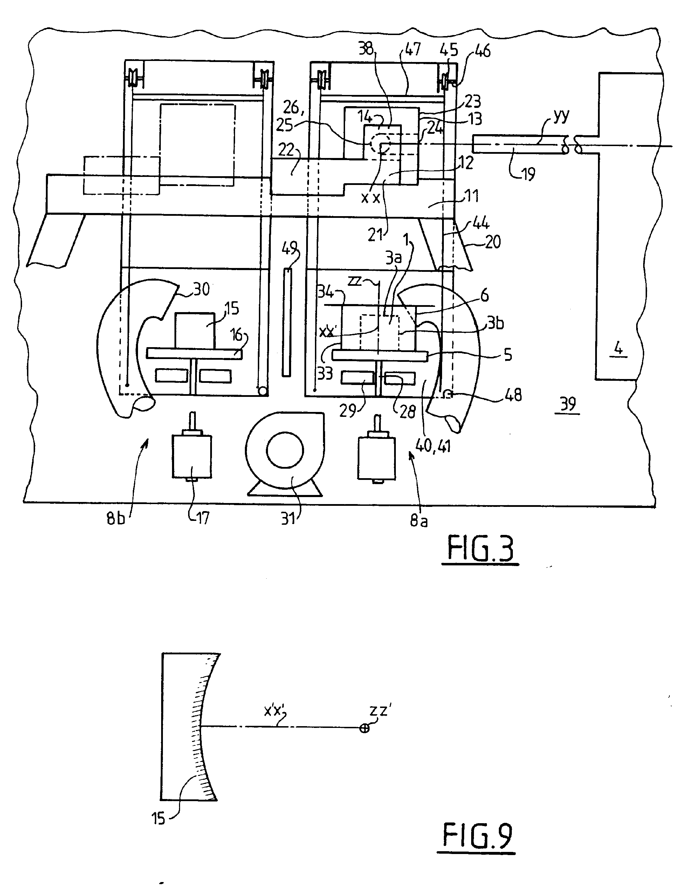

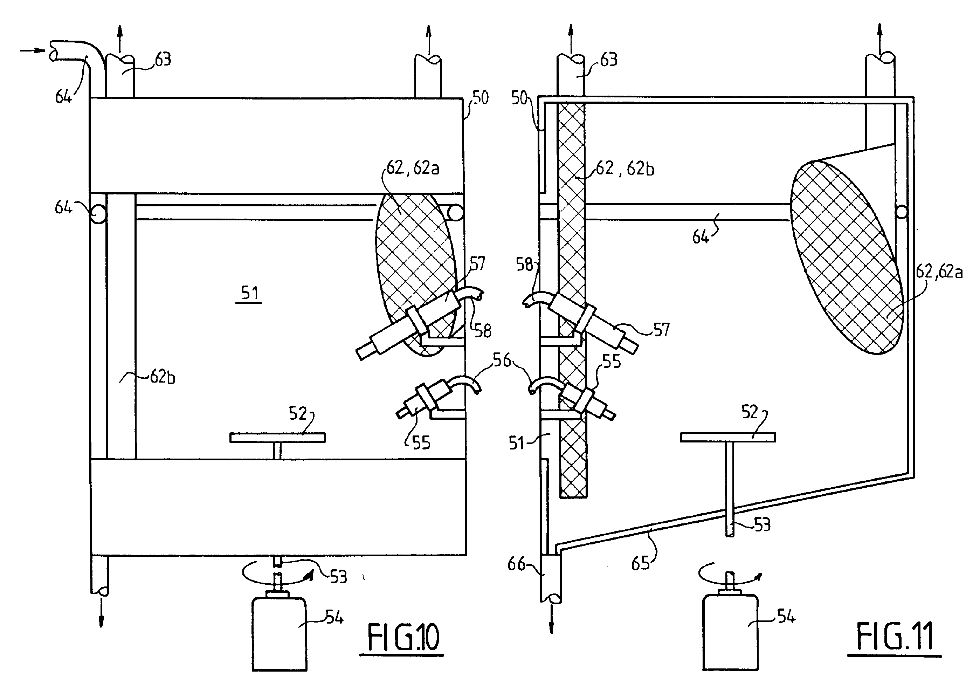

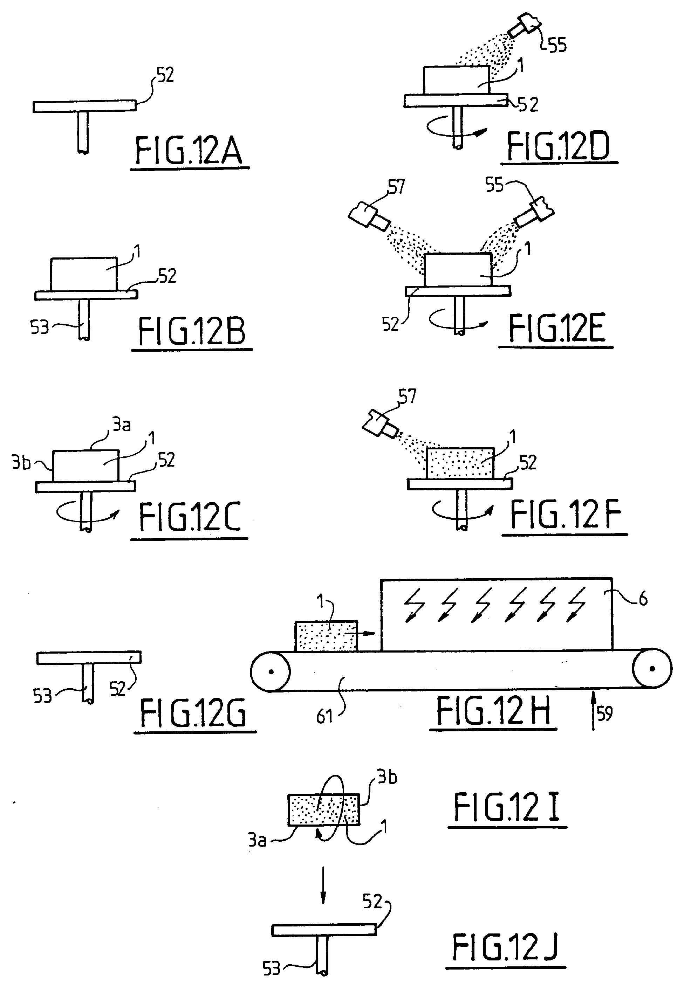

La figure 3 est une vue schématique de dessus du poste d'enrobage des figures 10 et 11.

L'invention concerne une installation pour le marquage superficiel d'un produit alimentaire (1), fromager ou charcutier, en vue de réaliser, sur la face externe de ce produit alimentaire une ou plusieurs marques superficielles (2).

L'installation selon l'invention est destinée à la mise en oeuvre du procédé décrit dans le document FR-A-2621529, document auquel on se réfère expressément.

Plus particulièrement et comme application préférentielle et la plus sophistiquée de l'invention, l'installation est destinée à la réalisation de plusieurs marques (2) respectivement sur la face supérieure (3a) et la face latérale (3b) du produit alimentaire (1). Sur les figures, le produit alimentaire (1) est représenté avec une forme générale cylindrique aplatie. Il va de soi cependant que d'autres formes sont également possibles.

L'installation comporte un laser (4), des moyens supports (5) du produit alimentaire (1) et des moyens aptes à réaliser un balayage transversal combiné à un coulissement longitudinal relatif du faisceau laser F provenant du laser (4) par rapport aux moyens supports (5), plus particulièrement par rapport aux produits alimentaires (1) qu'ils supportent. L'installation comporte également un masque (6), amovible, destiné à être interposé sur le faisceau laser F et comportant des fenêtres (7) dont les bords correspondent aux contours de la marque (2) à réaliser.

Basiquement, l'installation comporte au moins un et généralement plusieurs postes de marquage laser (8). On entend par poste de marquage laser (8) un ensemble formant une unité dans lequel des produits alimentaires (1) peuvent être traités, successivement, pour que soient réalisées sur leurs faces (3a), (3b) la ou les marques de resultant du faisceau laser (F) et du masque (6). Afin de permettre une mise en oeuvre industrielle de l'invention, il est préférentiellement prévu plusieurs postes de marquage laser (8), (8), etc., sur lesquels on reviendra ultérieurement.

Par ailleurs, l'intallation comporte un poste (9) pour l'enrobage du produit alimentaire (1) devant être marqué avec de la farine ou équivalent (10). Ce poste d'enrobage (9) est placé en amont du ou des postes de marquage (8). Cela signifie qu'un produit alimentaire 1 passe d'abord à un poste d'enrobage (9) puis ensuite à un poste de marquage laser (8). On entend par poste d'enrobage (9) un ensemble dans lequel un produit alimentaire (1) peut être traité pour être enrobé convenablement sur ses faces externes de farine ou équivalent (10). On a en effet constaté que la qualité de l'enrobage du produit alimentaire 1 avec de la farine ou équivalent (10) influait sur la qualité du marquage laser réalisé ultérieurement.

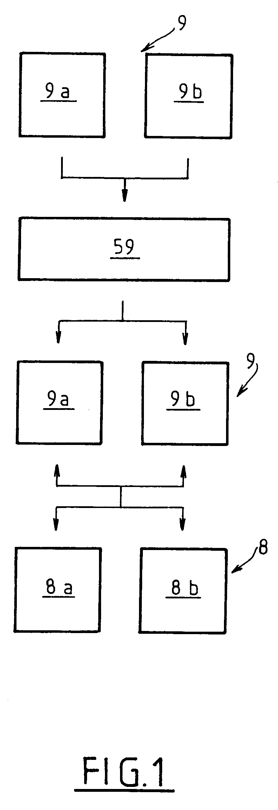

Pour des raisons de productivité industrielle, il est préférentiellement prévu plusieurs postes d'enrobage 9a, 9b (voir figure 1).

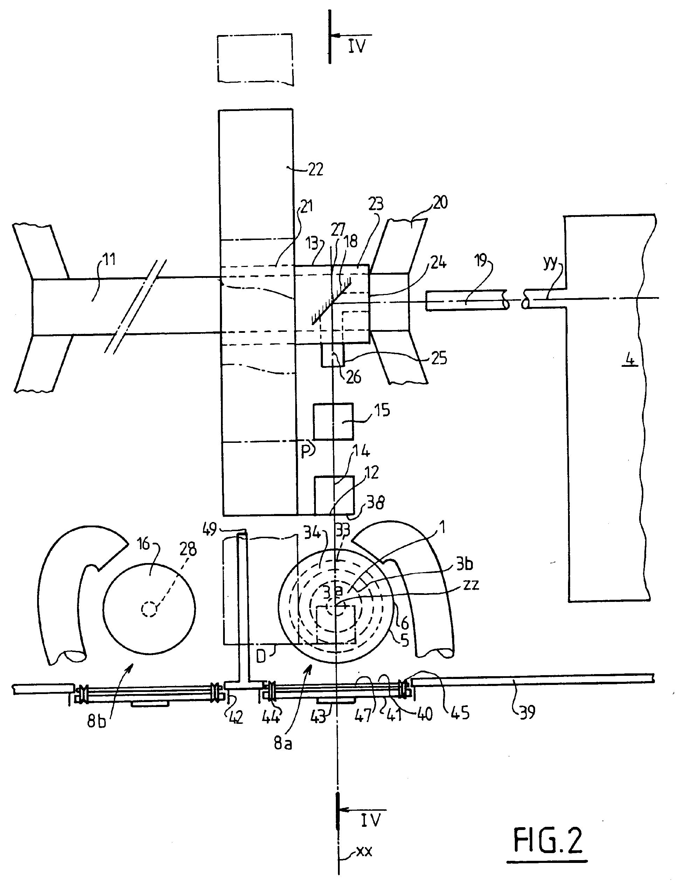

On se réfère maintenant plus particulièrement aux figures 2 à 9 qui illustrent le marquage laser.

Un poste de marquage laser (8) comprend une table linéaire (11), horizontale, supportant un chariot (12) monté à coulissement horizontal le long d'un axe xx. Il comprend ensuite des moyens de réception du faisceau laser provenant du laser (4) et de renvoi de ce faisceau selon l'axe xx en direction frontale, le tout constituant un ensemble de projection du faisceau laser (13). Le poste (8) comprend également un premier dispositif de renvoi de faisceau laser (14), verticalement et vers le bas, porté frontalement par le chariot (12) sur l'axe xx, de manière à recevoir le faisceau laser en sortie de l'ensemble de projection (13).

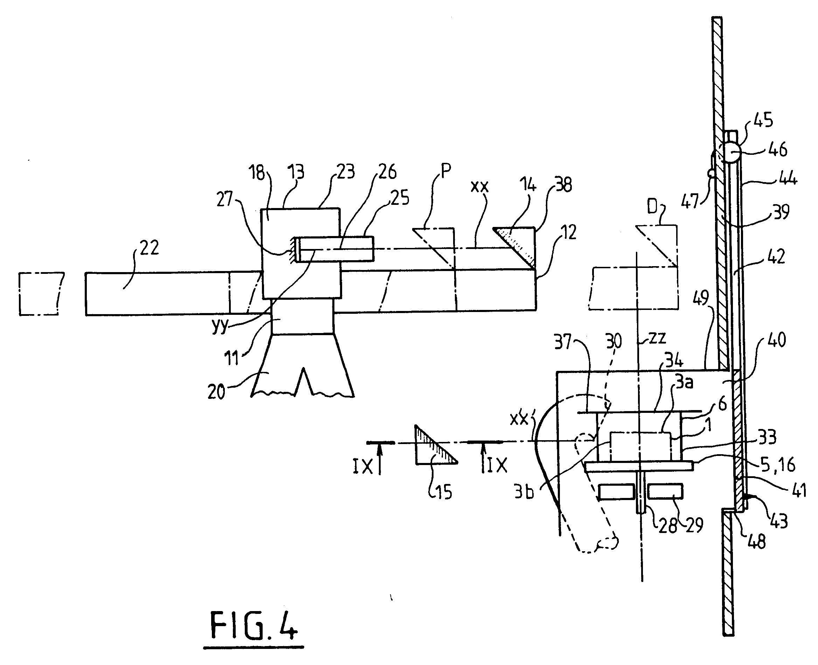

Un deuxième dispositif de renvoi du faisceau laser (15) selon d'une part un axe x'x' parallèle à et situé verticalement en dessous à l'aplomb de l'axe xx et d'autre part la direction frontale est situé de façon proximale et frontale par rapport à la table (11) (voir figure 4).

Un plateau support (16) du produit alimentaire (1) à marquer, horizontal, est monté à pivotement autour d'un axe vertical zz situé sensiblement dans le plan médian xxx'x', ce plateau support (16) étant situé de façon distale et frontale par rapport à la table (11) tout en étant sensiblement coplanaire avec le deuxième dispositif de renvoi (15).

La position distale est la plus éloignée frontalement de la table (11) tandis que la direction proximale est la plus proche en direction longitudinale de la table.

Le poste de marquage laser (8) comprend également des moyens d'entrainement (17) du plateau support (16) à pivotement autour de son axe zz ; des moyens d'entrainement du chariot à coulissement le long de son axe xx, non visible explicitement sur les dessins car intégrés à la fois à la table (11) et au chariot (12) ; et enfin des moyens de commande (non représentés) des moyens d'entrainement (17) du plateau support (16) et des moyens d'entrainement du chariot (12) à coulissement le long de son axe xx.

Dans le cas le plus sophistiqué où la marque (2) se trouvant sur la face supérieure 3A s'étend éventuellement dans une direction parallèle à l'axe xx mais aussi dans une direction orthogonale parallèle à l'axe yy, il est prévu à cette fin que la table linéaire (11) supporte l'ensemble de projection (13) ainsi que le chariot (12) de façon qu'il soit monté à coulissement horizontal le long d'un axe yy perpendiculaire à l'axe xx. L'installation comporte alors des moyens d'entrainement du chariot (12) et de l'ensemble de projection (13) à coulissement le long de l'axe yy. Ces moyens d'entrainement ne sont pas visibles sur les figures étant intégrés à la table linéaire (11), au chariot (12) et à l'ensemble (13). De plus, les moyens de commande commandent alors également les moyens d'entrainement de l'ensemble de projection (13) et du chariot (12) à coulissement le long de l'axe yy.

Préférentiellement, ainsi qu'il a été dit précédemment, l'installation comporte une pluralité de poste de marquage laser 8, 8. Tel est le cas sur les figures (2) et (3) où sont représentés deux postes de marquage laser (8a), (8b). Dans ce cas, les différents postes de marquage laser (8a), (8b), ont une table linéaire (11), un chariot (12), un ensemble de projection du faisceau laser (13), un premier dispositif de renvoi (14) unique et commun pour tous les postes de marquage laser. L'installation comporte autant de deuxième dispositifs (15) et de plateaux de support (16) que de postes. Chacun des postes de marquage laser (8a), (8b) présente un plan médian qui est un plan vertical comprenant les axes xx et zz. Les différents plans médians correspondant aux différents postes (8a), (8b) sont parallèles entre eux écartés les uns des autres le long de l'axe commun yy. Dans cette variante de réalisation préférentielle, on comprend que l'axe de coulissement yy sert d'une part à la réalisation du marquage laser d'une marque (2) sur la face supérieure (3a) d'un produit alimentaire (1), marque s'étendant parallèlement à l'axe yy et, simultanément au transfert de l'ensemble monobloc formé par le chariot (12) et l'ensemble de projection (13) d'un poste à l'autre.

Dans cette variante de mise en oeuvre, il est préférentiellement prévu un troisième dispositif de renvoi de faisceau laser (18) porté par l'ensemble de projection (13), ce dispositif de renvoi 18 recevant un faisceau laser incident provenant du laser (4) selon l'axe yy et permettant, en sortie, le renvoi du faisceau laser (F) le long de l'axe xx vers le premier dispositif de renvoi (14). Le faisceau laser incident provient d'un tube protecteur monté en sortie du laser (4) et situé latéralement par rapport à la table (11). Dans cette variante de réalisation, le faisceau laser incident dans le tube protecteur 19 peut rester fixe dans son ensemble, l'installation étant conçue pour permettre la réalisation de marques sur les faces supérieures et latérales (3a), (3b) d'un produit alimentaire (1) et même de plusieurs produits alimentaires dans les différents postes de marquage laser (8a), (8b) comme il a déjà été mentionné.

On se réfère maintenant à cette variante de réalisation, telle qu'elle est représentée sur les dessins en tant qu'elle constitue le mode de réalisation le plus sophistiqué de l'installation duquel peuvent être induits d'autres modes de réalisation plus simples. Pour permettre une description plus commode des postes de marquage laser (8a), (8b) on se réfère, dans l'espace, à trois directions de repérage à savoir une direction dite longitudinale, horizontale et parallèle à un axe xx; une direction dite transversale, horizontale et parallèle à un axe yy et une direction dite verticale parallèle à l'axe zz.

La table linéaire (11) s'étend essentiellement transversalement. Elle est supportée par un piètement (20). Cette table linéaire (11) comporte des guidages et moyens d'entrainement tels que poulies, crémaillère, etc...

Sur la table linéaire (11) est montée à coulissement dans la direction transversale yy une platine horizontale (21). Sur cette platine (21) sont montés côte à côte, d'un part, fixés rigidement, l'ensemble de projection (3) et, d'autre part, montée à coulissement longitudinal une tablette linéaire (22) s'étendant le long de la direction longitudinale. Cette tablette linéaire (22) comporte des organes de coulissement et d'entrainement, du même type générale que ceux de la table (11). A sa partie extrême libre frontale, la tablette linéaire (22) forme le chariot (12).

On entend par partie frontale celle qui le long d'une direction longitudinale est située du côté où se trouve le ou les plateaux supports (16). La partie opposée, située de l'autre côté de la table linéaire (11) est appelée partie arrière.

L'ensemble de projection (13) comporte un carter extérieur (23) fixé à la platine (21) pourvue d'une ouverture latérale (24) située en regard du tube protecteur (19) et sur sa face frontale d'un tube de projection (25) attenant à une ouverture frontale (26). Les deux ouvertures (24), (26) communiquent par l'espace interne au carter (23) dans lequel est monté un organe de renvoi du faisceau laser (27) tel qu'un miroir plan vertical incliné à 45° sur les axes xx et yy.

Le premier dispositif de renvoi (14) est constitué également par un miroir plan s'étendant parallèlement à l'axe yy et à 45° par rapport aux axes xx et zz.

Le deuxième dispositif de renvoi du faisceau laser (15) est également constitué par un miroir présentant une certaine concavité de manière à focaliser le faisceau laser vers le produit alimentaire (1) à marquer. Le plan général du miroir du second dispositif de renvoi (15) s'étend sensiblement parallèlement à celui du premier dispositif de renvoi tout en étant décalé par rapport à ce dernier vers le bas et vers la table linéaire (11).

Il va de soi que les miroirs constituant les organes ou dispositifs de renvoi (14), (15), (27) peuvent être réalisés de toute façon appropriée. Par exemple, il peut s'agir d'une surface de métal poli, refroidie de façon convenable pour ne pas être affectée ou détruite par le faisceau laser. Préférentiellement, ces organes ou dispositifs sont montés avec un dispositif à montage rapide de manière à pouvoir être remplacés aisément si nécessaire.

Le deuxième dispositif de renvoi (15) est placé, par rapport à la table linéaire (11) de manière que le faisceau laser vertical incident qui arrive sur lui n'interfère pas avec les autres organes constitutifs de l'installation.

Le plateau support (16) est par exemple un plateau circulaire entrainé par un moteur (17) placé en dessous. Un tel plateau (16) est fixé à un axe (28) porté par des paliers (29) faisant partie d'un bâti du poste de marquage laser (8). On entend par disposition sensiblement coplanaire du plateau support (16) et d'un deuxième dispositif de renvoi (18) le fait que la ligne horizontale transversale médiane du deuxième dispositif de renvoi (15) est située horizontalement au droit du masque (6) lorsqu'il est posé sur le plateau support (16) ainsi qu'il est décrit plus en détail ultérieurement.

Le plateau support (16), respectivement les différents plateaux supports des différents postes de marquage laser (8), (8) sont placés frontalement dans l'installation de manière à permettre l'accès.

Les moyens d'entrainement du chariot (12) à coulissement le long de son axe de coulissement xx permettent le coulissement du chariot (12) entre deux positions extrèmes à savoir une position distale et une position proximale repérées respectivent en (D) et (P) sur les figures 2 et 4. Ces notions de distale et proximale s'entendent par rapport à la table (11).

Dans la position distale, le premier dispositif de renvoi (14) est situé verticalement au dessus à l'aplomb du plateau support (16) ou encore du produit alimentaire (1) ou encore du masque (6) notamment de sa face supérieure. Dans la position proximale, le premier dispositif de renvoi est situé verticalement au dessus à l'aplomb du deuxième dispositif de renvoi (15).

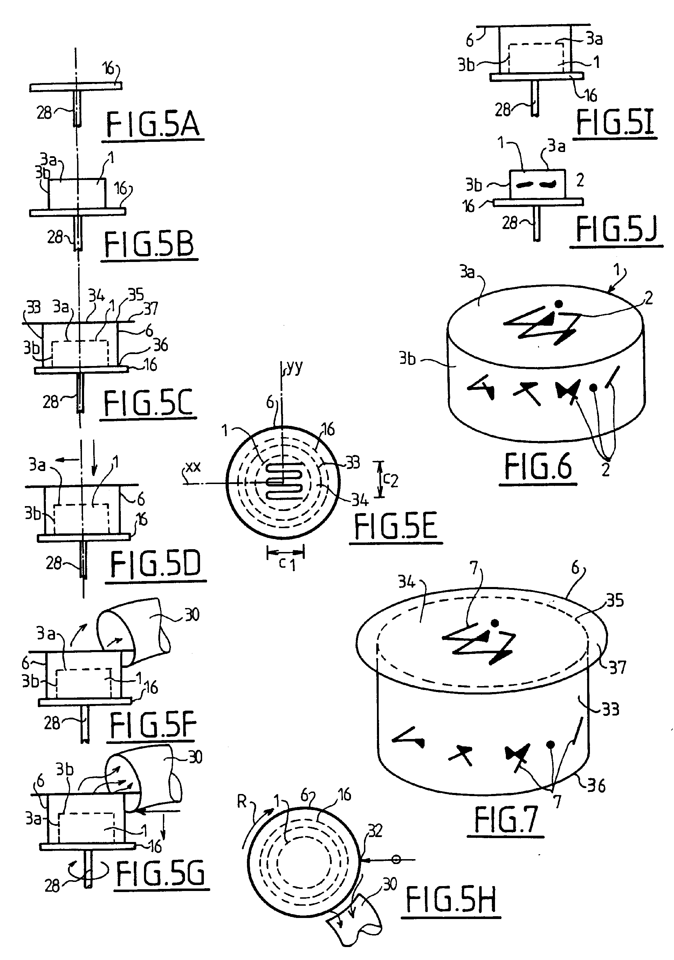

Selon l'invention, il est prévu, associé à au moins un plateau support une bouche d'aspiration (30) des vapeurs, fumées pouvant résulter du marquage laser, cette bouche étant destinée à être couplée à un dispositif d'aspiration refoulement (31). Préférentiellement, il est prévu au moins une bouche d'aspiration (30) par plateau support (16). Une telle bouche d'aspiration (30) est située en premier lieu à un niveau horizontal plus haut que le plateau support (16) et éventuellement le masque (6) qu'il supporte. En deuxième lieu, une bouche d'aspiration (30) est située en plan horizontal de façon décalée par rapport au plateau support (16) pour permettre la mise en place et l'enlèvement du masque (6) parallèlement à l'axe zz du plateau support (16). En d'autres termes, la bouche d'aspiration (30) n'est pas située exactement à l'aplomb du plateau support (16). En troisième lieu la bouche d'aspiration (30) est décalée en aval de l'impact du faisceau laser (F) sur le masque (6) et/ou le produit alimentaire (1) et cela par rapport à la direction de rotation du plateau support (16). Cette disposition est bien visible sur la figure 5h sur laquelle on voit en (32) l'impact du faisceau laser sur le masque (6) et qu'une zone soumise d'abord à l'impact du faisceau laser (32) passe ensuite au voisinage de la bouche d'aspiration (30) compte tenu du sens de rotation du plateau support (16) illustré par la flèche (R).

On se réfère maintenant à la figure 7 qui représente une forme de réalisation possible d'un masque (6). Un tel masque comporte d'une part une paroi latérale (33) de forme générale cylindrique ou prismatique dont l'axe est -lorsque le masque (2) est en position sur un plateau support (16)- sensiblement coaxial avec l'axe zz de ce plateau support (16). Le masque (6) comporte d'autre part une paroi horizontale supérieure (34) fixée au bord libre supérieur (35) de la paroi latérale (33) dont le bord libre inférieur (36) est destiné à reposer sur le plateau support (16) lorsque le masque (6) est en position. Les notions de supérieur, latéral, inférieur, etc., se réfèrent ici au cas où le masque (6) est en position normale de mise en oeuvre sur le plateau support (16). Un tel masque forme alors une sorte de cloche recouvrant le produit alimentaire (1) les fenêtres (7) étant ménagées sur les parois (33), (34).

Préférentiellement, la paroi horizontale supérieure (34) comporte un prolongement radial (37) dirigé vers l'extérieur notamment en forme de couronne cylindrique, qui permet simultanément de favoriser la dissipation de chaleur due à l'impact laser et d'autre part de saisir le masque (6) notamment manuellement sans se brûler.

Pour des raisons de sécurité, il est avantageusement fixé au chariot (12), frontalement par rapport au premier dispositif de renvoi (14) une plaque de protection (38) en un matériau pouvant empêcher le passage du faisceau laser (F), cette plaque étant de dimension suffisante et étant placée verticalement perpendiculairement à la direction longitudinale.

Dans une installation industrialisée qui est mise en oeuvre par des personnes chargées de la manipulation, il est prévu frontalement une paroi verticale de protection (39) en un matériau pouvant retarder le passage du faisceau laser (F), s'étendant suffisamment tant en direction transversale qu'en direction verticale. Une ou plusieurs ouvertures (40) sont percées dans la paroi verticale(39) notamment en regard de chaque poste de marquage (8a), (8b) ce qui signifie qu'il y a alors autant d'ouvertures (40) que de postes de marquage (8). Une ouverture (40) permet l'introduction et l'extraction du produit alimentaire (1) à marquer ainsi que du masque (6). Cette ouverture (40) peut être fermée par une porte (41). La porte (41) est par exemple montée à coulissement vertical sur et contre la paroi verticale (39) grâce à des organes de coulissement latéraux (42). La porte (41) comporte une poignée de manipulations (43) notamment à sa partie inférieure. Préférentiellement, la porte (41) est montée en équilibre et à cet effet il peut lui être fixé des câbles latéraux (44) s'étendant verticalement et vers le haut, passant, en partie supérieure sur des poulies de renvoi à gorge (45) à axe (46) horizontal et transversal. A leur autre extrémité, de l'autre côté des poulies (45), les câbles (44) supportent un contrepoids (47) assurant donc l'équilibrage de la porte (41).

Préférentiellement il est prévu un dispositif de sécurité (48) porté par la paroi (39) et la porte (41) de manière que le poste de marquage ne puisse fonctionner que lorsque la porte (41) est fermée. Egalement, il peut être prévues des cloisons de séparation (49) entre les plateaux supports (16), cloisons s'étendant verticalement, perpendiculairement à la direction transversale.

Préférentiellement il est également prévu un deuxième dispositif de sécurité empêchant le laser de fonctionner si le casque (6) n'est pas en place.

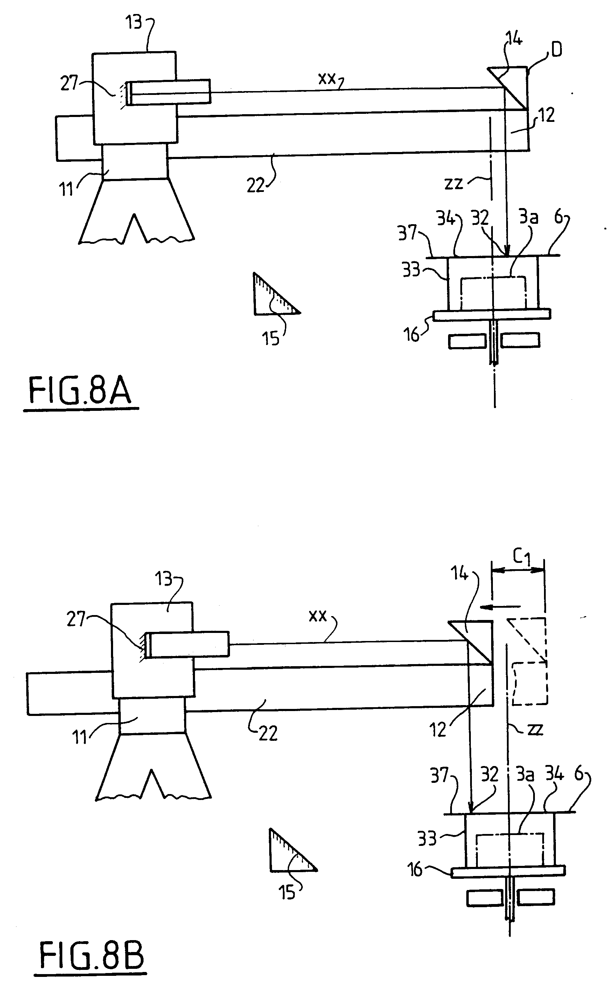

On en vient maintenant au fonctionnement d'un poste de marquage laser tel que vient d'être décrit et on se réfère à cet effet aux figures 5a à 5j et 8a à 8d.

Initialement, l'ensemble est à l'arrêt. Préférentiellement, le chariot (12) est en position proximale et cela de manière à permettre un accès commode au plateau support (16). En variante et pour autant que la distance d'écartement entre le premier dispositif de renvoi (14) et le plateau support (16) soit important, de manière à permettre un accès commode au plateau support (16), le chariot (12) est dès le départ en position distale.

L'utilisateur peut ouvrir la porte (41). Cet manoeuvre est rendue d'autant plus aisée qu'il est prévu des moyens d'équilibrage de celle-ci (44), (45), (46) et (47). La présence du dispositif (48), voire du deuxième dispositif de sécurité déjà cité, évite tout problème, la porte (41) étant ouverte. Le plateau support (16) est alors libre, dans cet état (figure 5A). L'utilisateur peut poser le produit alimentaire (1) avec sa face supérieure (3a) libre au dessus (figure 5b). Il peut ensuite poser sur le plateau support (16) et autour du produit alimentaire (1) le masque (6) à la manière d'une cloche. Cet manoeuvre est rendue d'autant plus aisée que le masque (6) comporte un prolongement radial (37). Le cas échéant, il est prévu sur le plateau support (16) des marques ou une rainure permettant de placer parfaitement en position le masque (6) par rapport au plateau support (16).

On se trouve alors dans le cas représenté par les figures 5d et 8A. Le faisceau laser F provenant du laser (4) suit d'abord un cheminement transversal d'axe yy à travers le tube (19) puis est renvoyé par l'organe de renvoi (27) le long de l'axe xx. Il vient alors frapper le premier dispositif de renvoi (14) qui dévie le faisceau laser verticalement et vers le bas parallèlement à l'axe zz du plateau support (16). Etant donné que le chariot (12) est dans sa position distale, le faisceau laser (4) renvoyé par le premier dispositif (14) vient rencontrer la paroi horizontale supérieure (34) du masque (6). Les moyens d'entrainement et de commande sont agencés pour que le plateau support (16) étant alors immobile, on assure le déplacement du chariot (12) à coulissement à partir de sa position distale extrême selon l'axe xx, alternativement dans une direction et dans l'autre sur une course faible au plus égale à celle du masque (6) et avec l'ensemble de projection (13) selon l'axe yy sur une course par pas successifs également faible et au plus égale à celle du masque (6). Cette course du chariot (12) le long de l'axe xx est figurée sur la figure (8b) par la distance C1. Elle figure aussi sur la figure 5e. La course selon l'axe yy est représentée sur la figure 5e par la distance C2. Les mouvements du chariot (12), combinés selon l'axe xx et selon l'axe yy sont réalisés avec une vitesse telle que puisse être réalisé un impact glissant à recouvrement ainsi qu'il est décrit dans le document FR2624529.

Lors de ce mouvement combiné, le faisceau laser F frappe soit la paroi horizontale supérieure (34) à l'endroit où elle est dépourvue de fenêtre (7) soit la face supérieure (3a) du produit (1) en laissant une marque (2). La réalisation de la marque (2) procure un dégagement de fumées et de vapeurs qui peut s'échapper de l'espace confiné défini par le masque (6) posé sur le plateau support (16) grâce aux fenêtres (7). Ces fumées et vapeurs sont évacuées par la bouche d'aspiration (30) et évacuées grâce au dispositif (31) (figure 5F).

Il est alors possible de commander le déplacement du chariot (12) pour l'amener dans sa position proximale (figure 8c). Dans cette situation, le faisceau laser renvoyé verticalement vers le bas par le premier dispositif de renvoi (14) vient frapper le deuxième dispositif de renvoi (15) de sorte que le faisceau laser est renvoyé horizontalement selon l'axe x'x' placé à l'aplomb verticalement en dessous de l'axe xx (ou plus exactement son prolongement).

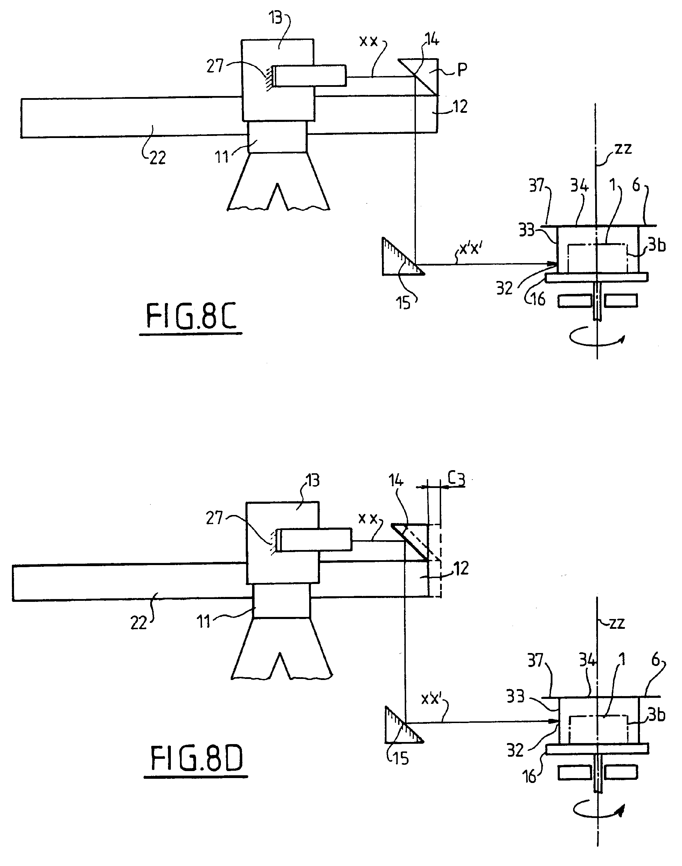

Les positions relatives du deuxième dispositif de renvoi (15) et du plateau support (16) ainsi que les dimensions du masque (6) notamment en sens axial le long de l'axe zz sont telles que le faisceau laser selon l'axe x'x' vient rencontrer la paroi latérale (33) du masque (6). On assure alors le déplacement du chariot (12) à partir de sa position proximale P à coulissement selon l'axe xx sur une course faible représentée sur la figure (8d) par la distance C3 de manière que l'impact du faisceau laser renvoyé par le premier dispositif de renvoi (14) coulisse le long du second dispositif de renvoi (15) pour passer de sa partie inférieure à sa partie supérieure ou inversement. Il s'en suit que l'axe x'x' est déplacé entre deux positions extrêmes inférieure (figure 8c) et supérieure (figure 8d). Cette course en sens axial est telle qu'elle permet de couvrir toute la hauteur axiale des fenêtres (7) ménagées sur la paroi latérale (33) du masque (6). Etant donné que le plateau support (16) effectue un nombre de tours suffisants, l'impact (32) du faisceau laser peut réaliser un impact () au sens du document FR 2621529 apte à réaliser sur la totalité de la périphérie du produit alimentaire (1) les marques (2) souhaitées.

Lors de ce marquage laser de la face latérale (3b) du produit alimentaire (1), il se produit également par les fenêtres (7) un dégagement de fumées, vapeurs récupérées et évacuées par la bouche d'aspiration (30).

Une fois que le marquage est réalisé, le plateau support 16 peut être arrêté, le chariot (12) peut être maintenu à sa position proximale sous réserve de ce qui a été dit précédemment. La porte (41) peut être ouverte. L'utilisateur peut enlever le masque (6) sans risquer de se brûler grâce au prolongement radial (37) puis le produit alimentaire (1) comportant les marques (2) (figures 5i et 5j).

La figure 6 représente un tel produit marqué, les marques réalisées étant purement indicatives et pouvant comprendre des marques ponctuelles, linéaires ou surfaciques.

Il est alors possible de préparer le poste pour une opération suivante. Le cas échéant, les différents postes (8a), (8b) sont à des états différents d'avancement du procédé de manière que par exemple pendant la durée de marquage sur un poste (8a), l'utilisateur met en place ou au contraire enlève le produit alimentaire (1) et le masque (6) du poste voisin (8b).

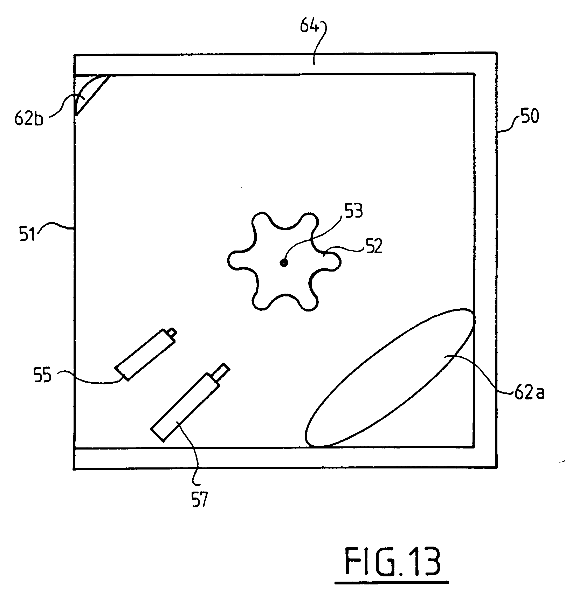

On se réfère maintenant aux figures 1 et 10 à 13 en ce qui concerne un poste d'enrobage de farine ou équivalent (10).

Un tel poste d'enrobage est placé en amont d'un poste de marquage laser (8) et il comprend une enceinte (50) de forme générale parallélépipédique, ayant une ouverture frontale (51) permettant le chargement et le déchargement du produit alimentaire (1) à enrober. Dans l'enceinte (50) est monté un plateau support (52) monté à pivotement autour d'un axe vertical (53). Le plateau support (52) est porté grâce à des paliers non représentés et il est situé en partie basse de l'enceinte (50).

Des moyens d'entrainement (54) du plateau support (52) à pivotement autour de son axe (53) sont prévus notamment en dessous de l'enceinte (50). Il peut s'agir par exemple d'un moteur ou d'un motoréducteur.

Le poste d'enrobage comporte également au moins un pistolet de projection de vernis (55) asssocié à des moyens d'amenée de vernis (56). Le pistolet (55) est placé à un niveau plus élevé que celui du plateau support (52) et il est dirigé généralement vers lui.

Le poste d'enrobage comporte également au moins un pistolet de projection de farine (10) ou équivalent (57). A ce pistolet (57) sont associés des moyens (58) d'amenée de farine ou équivalent (10). Le pistolet (57) est placé à un niveau plus élevé que le plateau support (52) et il est dirigé vers lui. Préférentiellement, les deux pistolets (55) et (57) sont placés à proximité immédiate l'un de l'autre, leurs axes étant sensiblement parallèles entre eux ou légèrement convergents en direction du plateau support (52).

Le poste d'enrobage (9) comporte également des moyens de commande de l'entrainement du plateau support (54) et des pistolets (55), (57).

Ces moyens de commande (non représentés) sont agencés pour que successivement : le plateau support (52) étant originalement à l'arrêt et vide de tout produit alimentaire (1) à enrober (figure 12A) l'utilisateur puisse déposer dessus un produit alimentaire (1) à enrober (figure 12B). Le plateau support (52) est alors entrainé en rotation autour de son axe (53) grâce au moyen d'entrainement (54) (figure 12C). Puis, successivement, le plateau support (52) étant toujours à pivotement autour de son axe (53), on assure d'abord la projection de vernis seul (figure 12D) puis la projection de vernis et de farine ou équivalent (10) simultanément (figure 12e), puis enfin la projection de farine ou équivalent seule (figure 12f). Sur la figure 12e la projection de vernis et la projection de farine sont représentées schématiquement selon deux directions opposées seulement pour mieux faire comprendre le fonctionnement. Dans la pratique, le flux de projection de vernis et le flux de projection de farine sont intimement mêlés l'un à l'autre du fait de la proximité et du caractère parallèle ou légèrement convergent des pistolets (55), (57). Ensuite, le plateau support (52) peut être amené à l'arrêt et le produit alimentaire (1) ainsi enrobé enlevé (figure 12g).

Le cas échéant, il peut être prévu un poste de séchage (59) constitué par exemple par un tunnel infrarouge (60) que traverse le produit alimentaire (1) supporté par exemple par un tapis transporteur sans fin (61) (figure 12h).

Eventuellement, le produit alimentaire (1) ainsi enrobé sur sa face supérieure précédente et sa face latérale peut être retourné (figure 12i) la face supérieure antérieure devenant face inférieure actuelle et vice versa et l'opération d'enrobage peut être recommencée de manière que la totalité du produit alimentaire (1) soit enrobée.

Préférentiellement, le poste d'enrobage comporte également une bouche d'aspiration (62) placée dans l'enceinte (50), couplée à un dispositif d'aspiration refoulement (63). Par exemple il est prévu au moins une bouche d'aspiration (62a) sensiblement horizontale et tournée vers le bas et au moins une bouche d'aspiration (62B) sensiblement verticale s'étendant sur la presque totalité de la hauteur de l'enceinte (50).

Egalement, préférentiellement, un poste d'enrobage (9) comporte également un dispositif de projection d'eau (64) notamment sur les faces internes des parois verticales de l'enceinte (50). Dans ce cas, le fond (65) de l'enceinte (50) est incliné et il comporte un point bas où se trouve une évacuation (66) pour l'eau de ruissellement provenant du dispositif (64).

Ainsi, qu'on peut le voir sur la figure (13), les bouches d'aspiration (62a), (62b) sont préférentiellement diamètralement opposées et le plateau support (16) à une forme générale d'étoile de manière que la majeur partie de la face externe du produit alimentaire (1) soit libre et donc enrobée de vernis et de farine ou équivalent (10). Le plateau (16) facilite par ailleurs la prise du fromage.

## Revendications

1. Installation pour le marquage superficiel d'un produit alimentaire (1) fromager ou charcutier qui comporte un laser (4), des moyens support (5) du produit alimentaire (1) à marquer, des moyens aptes à réaliser un balayage transversal combiné à un coulissement longitudinal relatif au faisceau laser (F) par rapport aux moyens support (5), ainsi qu'un masque (6) amovible destiné à être interposé sur le faisceau laser et comportant des fenêtres (7) dont les bords correspondent aux contours de la marque à réaliser caractérisée en ce qu'elle comporte au moins un poste de marquage (8), comprenant :
   – une table linéaire (11) horizontale supportant un chariot (12) monté à coulissement horizontal le long d'un axe xx ;
   – des moyens de réception du faisceau laser provenant du laser (4) et de renvoi de ce faisceau selon l'axe xx en direction frontale, constituant un ensemble de projection du faisceau laser (13) ;
   – un premier dispositif de renvoi du faisceau laser (14), verticalement et vers le bas, porté frontalement par le chariot (12), sur l'axe xx, de manière à recevoir le faisceau laser (F) en sortie de l'ensemble de projection (13) ;
   – un deuxième dispositif de renvoi du faisceau laser (15), selon d'une part un axe x'x' parallèle à et situé verticalement en dessous à l'aplomb de l'axe xx et d'autre part la direction frontale, situé de façon proximale et frontale par rapport à la table (11) ;
   – un plateau-support (16) du produit alimentaire (1) à marquer, horizontal, monté à pivotement autour d'un axe vertical (28,zz) situé sensiblement dans le plan médian xxx'x', situé de façon distale et frontale par rapport à la table (11), sensiblement coplanaire avec le deuxième dispositif de renvoi (15) ;
   – des moyens d'entraînement (17) du plateau-support (16) à pivotement autour de son axe (zz) ;
   – des moyens d'entraînement du chariot (12) à coulissement le long de son axe de coulissement (xx) entre une position distale et une position proximale où le premier dispositif de renvoi (14) est situé verticalement au dessus à l'aplomb respectivement du plateau-support (16) et du deuxième dispositif de renvoi (15) ;
   – des moyens de commande des moyens d'entraînement (17) du plateau et des moyens d'entraînement du chariot (12) à coulissement le long de son axe xx.

2. Installation selon la revendication 1, caractérisée en ce que la table (11) supporte l'ensemble de projection (13) et le chariot (12) montés à coulissement horizontal le long d'un axe yy perpendiculaire à l'axe xx et elle comporte des moyens d'entraînement du chariot (12) et de l'ensemble de projection (13) à coulissement le long de son axe yy, les moyens de commande commandant également les moyens d'entraînement de l'ensemble de projection et du chariot à coulissement le long de l'axe yy.

3. Installation selon la revendication 1 caractérisée en ce qu'elle comporte une pluralité de postes de marquage (8a, 8b) avec une table linéaire (11), un ensemble de projection (13), un chariot (12), un premier dispositif de renvoi (14) unique et commun et autant de deuxième dispositif de renvoi (15) et de plateaux support (16) que de postes (8a, 8b) dont les plans médians sont parallèles entre eux le long de l'axe yy.

4. Installation selon la revendication 1, caractérisée en ce qu'elle comporte un troisième dispositif de renvoi du faisceau laser (18) porté par l'ensemble de projection (13), recevant un faisceau laser incident provenant du laser (4) selon l'axe yy et permettant, en sortie, le renvoi du faisceau laser (F) le long de l'axe xx vers le premier dispositif de renvoi (14), le faisceau laser incident provenant d'un tube protecteur (19) monté en sortie du laser (4) et situé latéralement par rapport à la table (11).

5. Installation selon la revendication 1, caractérisée en ce qu'elle comporte, associée au moins un plateau-support (16) une bouche d'aspiration (30) de vapeurs, fumées, couplée à un dispositif d'aspiration, refoulement (31).

6. Installation selon la revendication 5, caractérisée en ce que la bouche d'aspiration (30) est située en premier lieu à un niveau horizontal plus haut que le plateau-support (16) et le masque (6) qu'il comporte, en deuxième lieu en plan horizontal décalé par rapport au plateau-support (16) pour permettre la mise en place et l'enlèvement du masque (6) parallèlement à l'axe (zz) du plateau support (16) et en troisième lieu en aval de l'impact (32) du faisceau laser (F) par rapport à la direction de rotation (R) du plateau-support (16).

7. Installation selon la revendication 1, caractérisée en ce que les moyens d'entraînement du plateau-support (16), du chariot (12), de l'ensemble de projection (13) et les moyens de commande sont agencés pour, successivement et pour un poste de marquage (8) donné :

– Amener le chariot (12) en position distale ;

– Le plateau-support (16) étant immobile, assurer le déplacement du chariot (12) à partir de la position distale à coulissement selon l'axe xx alternativement dans une direction et dans l'autre sur une course faible au plus égale à celle du masque (6) et avec l'ensemble de projection (13) selon l'axe yy sur une course par pas successifs au plus égale à celle du masque (6) ;

– Amener le chariot (12) en position proximale ;

– Amener le plateau-support (16) à pivoter autour de son axe (28), zz;

– Assurer le déplacement du chariot (12) à partir de sa position proximale à coulissement selon l'axe xx sur une course faible au plus égale à la hauteur axiale du masque (6).

8. Installation selon la revendication 1, caractérisée en ce qu'un masque (6) comporte d'une part une paroi latérale (33) de forme générale cylindrique ou prismatique, dont l'axe est destiné à être sensiblement coaxial à celui du plateau-support (16) et, d'autre part, une paroi horizontale supérieure (34) fixée au bord libre supérieur (35) de la paroi latérale (33) destinée à reposer par son bord libre inférieur (36) sur le plateau-support (16).

9. Installation selon la revendication 8, caractérisée en ce que la paroi horizontale supérieure (34) comporte un prolongement radial vers l'extérieur (37) permettant simultanément de favoriser la dissipation de chaleur et de saisir le masque (6).

10. Installation selon la revendication 1, caractérisée en ce que le deuxième dispositif de renvoi (15) est un miroir présentant une certaine concavité.

11. Installation selon la revendication 1, caractérisée en ce qu'elle comporte, fixé au chariot (12), frontalement, par rapport au premier dispositif de renvoi (14), une plaque de protection (38) en un matériau pouvant empêcher le passage du faisceau laser (F).

12. Installation selon la revendication 1, caractérisée en ce qu'elle comporte, frontalement une paroi verticale de protection (39) en un matériau pouvant retarder le passage du faisceau laser (F), comportant une ouverture (40) d'introduction et d'extraction du produit alimentaire (1) à marquer et du masque (6) pouvant être fermée par une porte (41) comportant un dispositif de sécurité (48) et montée avec équilibrage (44, 45, 46, 47).

13. Installation selon la revendication 1, caractérisée en ce qu'elle comporte au moins un poste pour l'enrobage (9) du produit alimentaire (1) à marquer, avec de la farine ou équivalent (10), placé en amont du poste de marquage (8) comprenant :

– une enceinte (50) ayant une ouverture frontale (51) de chargement et de déchargement ;

– un plateau-support (52) monté à pivotement autour d'un axe vertical (53), situé en partie basse de l'enceinte (50) ;

– des moyens d'entraînement (54) du plateau-support (52) à pivotement autour de son axe (53) ;

– au moins un pistolet (55) de projection de vernis associé à des moyens d'amenée (56) de vernis, placé à un niveau plus élevé que le plateau-support (52) et dirigé vers lui ;

– au moins un pistolet (57) de projection de farine ou équivalent (10) associé à des moyens d'amenée de farine ou équivalent, placé à un niveau plus élevé que le plateau-support (52) et dirigé vers lui ;

– et des moyens de commande de l'entraînement du plateau-support (52) et des pistolets (55, 57) de projection de vernis et de farine ou équivalent (10).

14. Installation selon la revendication 13, caractérisée en ce que les moyens de commande sont agencés pour successivement et lorsque le plateau-support (52) est à pivotement autour de son axe (53), assurer d'abord la projection de vernis seul, puis de vernis et de farine ou équivalent (10) simultanément puis, enfin de farine ou équivalent (10) seule.

15. Installation selon la revendication 13, caractérisée en qu'elle comporte également, au moins une bouche d'aspiration (62) placée dans l'enceinte (50) couplée à un dispositif d'aspiration refoulement (63).

16. Installation selon la revendication 15, caractérisée en ce qu'elle comporte au moins une bouche d'aspiration (62a) sensiblement horizontale et tournée vers le bas et au moins une bouche d'aspiration (62b) sensiblement verticale.

17. Installation selon la revendication 13, caractérisée en ce qu'elle comporte un dispositif de projection d'eau (64) sur les faces internes des parois de l'enceinte (50).

18. Installation selon la revendication 17, caractérisée en ce que le fond (65) de l'enceinte (50) est incliné et comporte un point bas où se trouve une évacuation (66) d'eau de ruissellement.

19. Installation selon la revendication 13, caractérisée en ce que le plateau-support (52) en élévation a une forme générale d'étoile.

20. Installation selon la revendication 13, caractérisée en ce qu'un poste d'enrobage (9) est associé au moins un poste de séchage (59) constitué par un tunnel à infrarouge (60, 61).

## Patentansprüche

1. Vorrichtung zum Markieren der Oberfläche von Käse- oder Wurstwaren (1), mit einem Laser (4), mit einer Aufnahmeeinrichtung (5) für die zu markierenden Käse- oder Wurstwaren (1), mit Mitteln zur transversalen Ablenkung in Verbindung mit einer longitudinalen Relativverschiebung eines Laserstrahls (F) gegenüber der Aufnahmeeinrichtung (5), sowie mit einer abnehmbaren Maske (6), die in den Laserstrahl gebracht werden soll und Öffnungen (7) aufweist, deren Umrandungen Konturen der aufzubringenden Markierungen entsprechen, **dadurch gekennzeichnet**, daß sie mindestens eine Markierungsstation (8) besitzt, die folgende Merkmale aufweist:
   – Einen waagerechten, geradlinigen Tisch (11), auf dem ein Schlitten (12) so angebracht ist, daß er entlang einer Achse (xx) waagerecht verschiebbar ist;
   – Mittel zum Empfangen eines von einem Laser (4) ausgehenden Laserstrahls und zum Ablenken dieses Strahls entlang der Achse (xx) in Frontrichtung, welche Mittel eine Laser-Projektionseinrichtung (13) bilden;
   – eine erste Ablenkeinrichtung (14) zum Ablenken des Laserstrahls senkrecht nach unten, die auf der Achse (xx) an der Stirnseite des Schlittens (12) befestigt ist, so daß sie den Laserstrahl (F) beim Austritt aus der Laser-Projektionseinrichtung (13) empfangen kann;
   – eine zweite Ablenkeinrichtung (15) zum Ablenken des Laserstrahls zum einen entlang einer zur Achse (xx) parallelen, senkrecht unter ihr und lotrecht zu ihr verlaufenden Achse (x'x') und zum anderen in Frontrichtung, welche nahe und frontal zum Tisch (11) gelegen ist;
   – eine waagerechte Halteplatte (16) zur Aufnahme der zu markierenden Käse- oder Wurstwaren (1), die um eine senkrechte Achse (28,zz) drehbar gelagert ist, die sich in etwa in der Mittelebene (xxx'x') befindet, die entfernt vom und frontal zum Tisch (11) gelegen ist und die in etwa koplanar zur zweiten Ablenkeinrichtung (15) ist;
   – Antriebsmittel (17) zum Drehen der Halteplatte (16) um deren Achse (zz);
   – Antriebsmittel zum Verschieben des Schlittens (12) entlang seiner Verschiebeachse (xx) zwischen einer fernen und einer nahen Position, in denen sich die erste Ablenkeinrichtung (14) senkrecht über und lotrecht zu der Halteplatte (16) bzw. senkrecht über und lotrecht zu der zweiten Ablenkeinrichtung (15) befindet;
   – Mittel zur Steuerung der Antriebsmittel (17) der Halteplatte (16) und der Antriebsmittel zum Verschieben des Schlittens (12) entlang dessen Achse (xx).

2. Vorrichtung nach Anspruch 1, dadurch gekennzeichnet, daß an dem Tisch (11) die Laser-Projektionseinrichtung (13) und der Schlitten (12) so befestigt sind, daß sie waagerecht entlang einer zur Achse (xx) rechtwinkligen Achse (yy) verschiebbar sind, daß der Tisch (11) betriebsmittel zum Verschieben des Schlittens (12) und der Laser-Projektionseinrichtung (13) entlang der Achse (yy) sowie die Mittel zur Steuerung der Antriebsmittel zum Verschieben der Laser-Projektionseinrichtung (13) und des Schlittens (12) entlang der Achse (yy) enthält.

3. Vorrichtung nach Anspruch 1, dadurch gekennzeichnet, daß sie eine Vielzahl von Markierungsstationen (8a,8b) aufweist, mit einem geradlinigen Tisch (11), einer Laser-Projektionseinrichtung (13), einem Schlitten (12), einer einzigen, gemeinsamen ersten Ablenkeinrichtung (14) sowie mit genausovielen zweiten Ablenkeinrichtungen (15) und Halteplatten (16) wie Markierungsstationen (8a,8b) vorhanden sind, deren Mittelebenen entlang der Achse (yy) einander parallel sind.

4. Vorrichtung nach Anspruch 1, dadurch gekennzeichnet, daß sie eine dritte Ablenkeinrichtung (18) für den Laserstrahl aufweist, die von der Laser-Projektionseinrichtung (13) getragen ist und einen von einem Laser (4) entlang der Achse (yy) ausgehenden, einfallenden Laserstrahl empfängt und beim Austritt die Ablenkung des Laserstrahls (F) entlang der Achse (xx) in Richtung auf die erste Ablenkeinrichtung (14) ermöglicht, wobei der einfallende Laserstrahl von einem am Ausgang des Lasers (4) befestigten und seitlich zum Tisch (11) angeordneten Schutzrohr (19) ausgeht.

5. Vorrichtung nach Anspruch 1, dadurch gekennzeichnet, daß sie eine zu mindestens einer Halteplatte (16) zugehörige Absaugöffnung (30) zum Absaugen von Dämpfen oder Rauch aufweist, die mit einer Absaugfördervorrichtung (31) gekoppelt ist.

6. Vorrichtung nach Anspruch 5, dadurch gekennzeichnet, daß sich die Absaugöffnung (30) in erster Linie auf einer höheren horizontalen Ebene als die Halteplatte (16) und die auf ihr befindliche Maske (6) befindet, daß sie sich in zweiter Linie in einer zur Halteplatte (16) versetzten horizontalen Ebene befindet, um das Positionieren und Entfernen der Maske (6) parallel zur Achse (zz) der Halteplatte (16) zu ermöglichen, und daß sie sich in dritter Linie bezüglich der Rotationsrichtung (R) der Halteplatte (16) unterhalb des Auftreffpunkts (32) des Laserstrahls (F) befindet.

7. Vorrichtung nach Anspruch 1, dadurch gekennzeichnet, daß die Antriebsmittel der Halteplatte (16), des Schlittens (12) und der Laser-Projektionseinrichtung (13) sowie die Mittel zur Steuerung so miteinander kombiniert sind, daß sie nacheinander und für eine gegebene Markierungsstation (8):

– den Schlitten (12) in die entfernte Postion bringen;

– den Schlitten (12) von der entfernten Position aus entlang der Achse (xx) entweder in die eine Richtung oder in die andere über einen kleinen Bereich hinweg, der möglichst gleich dem der Maske (6) ist, verschieben und, mit der Laser-Projektionseinrichtung (13) den Schlitten (12) entlang der Achse (yy) in aufeinanderfolgenden Schritten über einen Bereich verschieben, der möglichst gleich dem der Maske (6) ist, wobei die Halteplatte (16) nicht bewegt wird;

– den Schlitten (12) in die nahe Position bringen;

– die Halteplatte (16) in eine Drehbewegung um ihre Achse (28,zz) versetzen;

– den Schlitten (12) von seiner nahen Position aus entlang der Achse (xx) über einen kleinen Bereich verschieben, der möglichst gleich der axialen Höhe der Maske (6) ist.

8. Vorrichtung nach Anspruch 1, dadurch gekennzeichnet, daß eine Maske (6) zum einen eine im wesentlichen zylindrisch oder prismatisch geformte Seitenwand (33), deren Achse im wesentlichen koaxial zu derjenigen der Halteplatte (16) sein soll, und zum anderen eine horizontale obere Wand (34) besitzt, die am freien oberen Rand (35) der Seitenwand (33) befestigt ist, welche mit ihrem freien unteren Rand (36) auf der Halteplatte (16) aufliegen soll.

9. Vorrichtung nach Anspruch 8, dadurch gekennzeichnet, daß die horizontale obere Wand (34) eine äußere radiale Verlängerung (37) besitzt, die gleichzeitig die Wärmeableitung begünstigt und das Ergreifen der Maske (6) erleichtert.

10. Vorrichtung nach Anspruch 1, dadurch gekennzeichnet, daß die zweite Ablenkeinrichtung (15) ein Spiegel mit einer bestimmten Konkavität ist.

11. Vorrichtung nach Anspruch 1, dadurch gekennzeichnet, daß sie eine auf dem Schlitten (12) befestigte, zur ersten Ablenkeinrichtung (14) frontal angeordnete Schutzplatte (38) aufweist, deren Material den Durchtritt des Laserstrahls (F) verhindert.

12. Vorrichtung nach Anspruch 1, dadurch gekennzeichnet, daß sie an der Vorderseite eine senkrechte Schutzwand (39) aus einem den Durchtritt des Laserstrahls (F) hemmenden Material aufweist, die mit einer Öffnung (40) zum Einsetzen und Herausnehmen der zu markierenden Käse- und Wurstwaren (1) und der Maske (6) versehen ist, die durch eine Tür (41) verschließbar ist, welche eine Sicherheitsvorrichtung (48) aufweist und über eine Gleichgewichtsanordnung (44,45,46,47) gehalten ist.

13. Vorrichtung nach Anspruch 1, dadurch gekennzeichnet, daß sie mindestens eine Station (9) zum Überziehen der zu markierenden Käse- oder Wurstwaren (1) mit Mehl (10) oder dergleichen aufweist, die oberhalb der Markierungsstation (8) angeordnet ist, mit folgenden Merkmalen:

– einem Gehäuse (50) mit einer vorderen Öffnung (51) zum Beschicken und Entnehmen;

– einer um eine senkrechte Achse (53) drehbar gelagerten Halteplatte (52), die im unteren Teil des Gehäuses (50) angeordnet ist;

– Antriebsmitteln (44) zum Drehen der Halteplatte (52) um ihre Achse (53);

– mindestens einer Sprühpistole (55) zum Aufsprühen von Lack, die mit einer Zuführeinrichtung (56) für den Lack verbunden ist, oberhalb der Halteplatte (52) angeordnet und auf diese gerichtet ist;

– mindestens einer Sprühpistole (57) zum Aufsprühen von Mehl (10) oder dergleichen, die mit einer Zuführeinrichtung für Mehl oder dgl. verbunden ist, oberhalb der Halteplatte (52) angeordnet und auf diese gerichtet ist;

– und Mitteln zur Steuerung des Antriebs der Halteplatte (52) und der Sprühpistolen (55,57) zum Aufsprühen von Lack und Mehl (10) oder dergleichen.

14. Vorrichtung nach Anspruch 13, dadurch gekennzeichnet, daß die Mittel zur Steuerung so angeordnet sind, daß sie, wenn die Halteplatte (52) sich um ihre Achse (53) dreht, nacheinander zuerst das Aufsprühen von Lack, dann das gleichzeitige Aufsprühen von Lack und Mehl (10) oder dergleichen, dann schließlich das Aufsprühen nur von Mehl (10) oder dergleichen steuern.

15. Vorrichtung nach Anspruch 13, dadurch gekennzeichnet, daß sie gleichzeitig mindestens eine im Gehäuse (50) angeordnete Absaugöffnung (62) aufweist, die mit einer Absaugfördervorrichtung (63) verbunden ist.

16. Vorrichtung nach Anspruch 15, dadurch gekennzeichnet, daß sie mindestens eine im wesentlichen horizontal angeordnete und nach unten gerichtete Absaugöffnung (62a) und mindestens eine im wesentlichen vertikal angeordnete Absaugöffnung (62b) aufweist.

17. Vorrichtung nach Anspruch 13, dadurch gekennzeichnet, daß sie eine Vorrichtung zum Aufsprühen von Wasser (64) auf die Innenflächen der Wände des Gehäuses (50) aufweist.

18. Vorrichtung nach Anspruch 17, dadurch gekennzeichnet, daß der Boden (65) des Gehäuses (50) geneigt ist und eine Vertiefung aufweist, in der sich ein Abfluß (66) für das abfließende Wasser befindet.

19. Vorrichtung nach Anspruch 13, dadurch gekennzeichnet, daß die Halteplatte (52) von oben gesehen im wesentlichen die Form eines Sterns hat.

20. Vorrichtung nach Anspruch 13, dadurch gekennzeichnet, daß eine Station (9) zum Überziehen mit mindestens einer Trockenstation (59) verbunden ist, die aus einem Infrarottunnel (60,61) besteht.

## Claims

1. An installation for marking the surface of a cheese or meat food product (1), the apparatus including a laser (4), support means (5) for supporting the food product (1) to be marked, means suitable for causing the laser beam (F) to perform transverse scanning in combination with relative longitudinal sliding relative to the support means (5), and a removable mask (6) for interposing on the laser beam and including windows (7) wise edges correspond to the outlines of the mark to be made, the installation being characterized in that it includes at least one marking station (8) comprising:

a horizontal linear table (11) supporting a carriage (12) mounted to slide horizontally along an axis xx;

means for receiving the laser beam coming from the laser (4) and for reflecting said beam along the axis xx in a forwards direction, said means constituting a laser beam projection assembly (13);

a first laser beam reflecting device (14) for reflecting the laser beam vertically downwards and carried at the front of the carriage (4) on the axis xx to receive the laser beam (F) output by the projection assembly (13);

a second laser beam reflecting device (15) for reflecting the laser beam in a forwards direction along an axis x'x' parallel to and situated vertically beneath the axis xx, said second device being situated close to and in front of the table (11);

a horizontal turntable (16) for supporting the food product (1) to be marked and pivotally mounted about a pivot axis (28, zz) situated substantially in the midplane xxx'x', at a distance from and in front of the table (11), and being substantially coplanar with the second reflecting device (15);

drive means (17) for driving the turntable (16) about its axis (ZZ);

drive means for driving the carriage (12) so that it slides along its sliding axis (xx) between a distant position and a close position where the first reflecting device (14) is situated respectively vertically above the turntable (16) and vertically above the second reflecting device (15); and

control means for controlling the turntable drive means (17) and the means for driving the carriage (12) to slide along its axis xx.

2. An installation according to claim 1, characterized in that the table (11) supports the projection assembly (13) and the carriage (12) which are mounted to slide horizontally along an axis yy perpendicular to the axis xx, and includes means for driving the carriage (12) and the projection assembly (13) to slide along its axis yy, the control means also controlling the drive means for driving the projection assembly and the carriage to slide along the axis yy.

3. An installation according to claim 1, characterized in that it includes a plurality of marking stations (8a, 8b) associated with a linear table (11), a projection assembly (13), a carriage (12), a first reflecting device (14) that is unique and common, and as many second reflecting devices (15) and supporting turntables ( 16 ) as there are stations (8a, 8b) whose midplanes are parallel to one another along the axis yy.

4. An installation according to claim 1, characterized in that it includes a third laser beam reflecting device (18) carried by the projection assembly (13) and receiving an incident laser beam from the laser (4) along the axis yy, and at its outlet making it possible to reflect the laser beam (F) along the axis xx towards the first reflecting device (14), the incident laser beam coming from a protective tube (19) mounted at the outlet of the laser (4) and situated laterally relative to the table (11).

5. An installation according to claim 1, characterized in that in association with at least one turntable (16) it includes a suction inlet (30) for sucking up vapor and smoke, and coupled to a suction and exhaust device (31).

6. An installation according to claim 5, characterized in that the suction inlet (30) is situated firstly at a horizontal level that is above the turntable (16) and the mask (6) of the turntable, secondly in a horizontal plane offset relative to the turntable (16) to enable the mask (6) to be installed and removed parallel to the axis (zz) of the turntable (16), and thirdly downstream from the impact (32) of the laser beam (F) in the direction of rotation (R) of the turntable (16).

7. An installation according to claim 1, characterized in that the control means and the drive means for the turntable (16), the carriage (12), and the projection assembly (13) are organized to perform the following in succession at a given marking station (8):

bring the carriage (12) to its distant position;

while the turntable (16) is stationary, move the carriage (12) from its distant position by sliding along the axis xx alternately in one direction and in the opposite direction along a stroke that is wall and not greater than the size of the mask (6), and simultaneously move the projection assembly (13) along the axis yy in successive steps along a stroke that is not greater than the size of the mask (6);

bring the carriage (12) to its near position;

cause the turntable (16) to rotate about its axis (28), zz; and

cause the carriage (12) to move from its near position by sliding along the axis xx over a small stroke that is not greater than the axial height of the mask (6).

8. An installation according to claim 1, characterized in that a mask (6) includes firstly a side wall (33) that is generally cylindrical or prismatic in shape, whose axis is intended substantially to coincide with the axis of the turntable (16), and secondly a top horizontal wall (34) fixed to the top free edge (35) of the side wall (33) which is intended to rest via its bottom free edge (36) on the turntable (16).

9. An installation according to claim 8, characterized in that the top horizontal wall (34) includes an outwardly-directed radial extension (37) serving simultaneously to enhance heat dissipation and to facilitate handling the mask (6).

10. An installation according to claim 1, characterized in that the second reflecting device (15) is a mirror that is concave to some extent.

11. An installation according to claim 1, characterized in that it includes a protective plate (38) fixed in front of the carriage (12) relative to the first reflecting device (14), the protective plate being made of a material capable of preventing the laser beam (F) from passing.

12. An installation according to claim 1, characterized in that it includes a front vertical protective wall (39) made of a material capable of holding up the passage of the laser beam (10), the wall including an opening (40) for inserting and removing the mask (6) and the food product (1) to be marked, the opening being capable of being closed by a door (41) including a safety device (48), and mounted with balancing (44, 45, 46, 47).

13. An installation according to claim 1, characterized in that it includes at least one station (9) for coating the food product (1) to be marked with flour or the equivalent (10), said station being mounted upstream from the marking station (8) and comprising:

an enclosure (50) having a front opening (51) for loading and for unloading;

a turntable (52) mounted to pivot about a vertical axis (53) and situated at the bottom of the enclosure (50);

drive means (54) for driving the turntable (52) to pivot about its axis (53);

at least one gun (55) for spraying varnish and associated with varnish feed means (56), and placed at a level higher than the turntable (52) and pointing towards it;

at least one gun (57) for spraying flour or the equivalent (10) associated with means for feeding it with flour or the equivalent, placed at a level higher than the turntable (52) and pointing towards it; and

means for controlling the drive of the turntable (52) and of the guns (55, 57) for spraying varnish and flour or the equivalent (10).

14. An installation according to claim 13, characterized in that the control means are organized so that while the turntable (52) is pivoting about its axis (53), the following are ensured ensure in succession: firstly varnish only is sprayed; then varnish and flour or the equivalent (10) are sprayed simultaneously; and finally flour or the equivalent (10) is sprayed on its own.

15. An installation according to claim 13, characterized in that it also includes at least one suction inlet (62) placed in the enclosure (50) and coupled to a suction and exhaust device (63).

16. An installation according to claim 15, characterized in that it includes at least one suction inlet (62a) which is substantially horizontal and which faces downwards, and at least one suction inlet (62b) which is substantially vertical.

17. An installation according to claim 13, characterized in that it includes a device for spraying water (64) onto the inside faces of the wall of the enclosure (50).

18. An installation according to claim 17, characterized in that the bottom (65) of the enclosure (50) slopes and includes a low point where a drain (66) is provided for run-off water.

19. An installation according to claim 13, characterized in that the turntable (52) is generally star-shaped in elevation.

20. An installation according to claim 13, characterized in that a coating station (9) is associated with at least one drying station (59) constituted by an infrared tunnel (60, 61).

FIG.1

FIG.2

FIG.3

FIG.9

16

FIG.4

FIG.5A

FIG.5B

FIG.5C

FIG.5D

FIG.5E

FIG.5F

FIG.5G

FIG.5H

FIG.5I

FIG.5J

FIG.6

FIG.7

FIG.8A

FIG.8B

FIG.8C

FIG.8D

FIG.10

FIG.11

EP 0 421 837 B1

FIG.12A

FIG.12B

FIG.12C

FIG.12D

FIG.12E

FIG.12F

FIG.12G

FIG.12H

FIG.12 I

FIG.12J

22

FIG.13